# EUROPEAN PATENT APPLICATION

(11) **EP 4 814 277 A1**
(43) Date of publication of application: **30.09.2026**
(21) Application number: 26161533.0
(22) Date of filing: 02.03.2026
(51) Int. Cl.: F02C 3/22, F02C 7/224, F02C 7/236, F02C 9/40

(54) **ENGINE SYSTEM**

(30) Priority: 28.03.2025 GB 202504617
(71) Applicant: Rolls-Royce plc, London N1 9FX (GB)
(72) Inventor: Willmot, Michael C, Derby, DE24 8BJ (GB)
(74) Representative: Rolls-Royce plc

(57) **Abstract**

An engine system 400 comprises a fuel system 200 arranged to supply fuel to the combustor 304 of a gas turbine engine 300. A fuel store 200 stores the fuel as a cryogenic liquid and includes a primary pump arranged to pump the cryogenic liquid to a secondary pumping arrangement 227 via a fuel outlet 218. The secondary pumping arrangement substantially increases the pressure of the cryogenic liquid to prevent boil off prior to delivery of thereof to a heating arrangement 232 which vaporises the cryogenic liquid using waste heat from the gas turbine engine to produce fuel in the form of a supercritical fluid which is delivered to the combustor. The system 400 allows fuels, such as hydrogen, methane and ammonia, which are of interest for carbon-neutral or fully decarbonised aviation and which typically need to be stored as cryogenic liquids to achieve volumetric and/or energy densities consistent with aviation, to be efficiently stored, pumped, conditioned and delivered to the engine of the system.

## Description

### BACKGROUND

This invention relates to an engine system for an aircraft, to an aircraft comprising the engine system and to a method of providing fuel to a gas turbine engine.

In order to achieve carbon-neutral or fully decarbonised operation of gas turbine engines for aviation, it has been proposed to fuel such engines with fuels, such as hydrogen, methane or ammonia, which might be stored initially as cryogenic liquids in order to achieve volumetric and/or gravimetric energy densities consistent with aeronautical applications. However, pumping such a fuel in the form of a cryogenic liquid and then further conditioning the fuel in order to deliver it to a gas turbine engine in a required phase and at a suitable temperature, pressure and flow-rate is technically challenging and requires significant departure from conventional approaches used for fossil fuels. The conventional approaches provide no assistance as to how this might be achieved using fuels such as hydrogen, methane and ammonia.

### SUMMARY

According to first aspect of the invention, an engine system comprises a gas turbine engine and a fuel system, wherein the fuel system comprises
(i) a fuel store for storing a fuel as a cryogenic liquid fuel at a first pressure, the fuel store having a fuel outlet;
(ii) a primary pump disposed within the fuel store and arranged to pump cryogenic liquid fuel stored within the fuel store to the fuel outlet;
(iii) a secondary pumping arrangement having an input coupled to the fuel outlet by a first fuel conduit and an output coupled to a second fuel conduit, the secondary pumping arrangement being arranged to output cryogenic liquid fuel at a second pressure greater than the first pressure; and
(iv) a heating arrangement having an input coupled to the output of the secondary pumping arrangement by the second fuel conduit and an output coupled to a third fuel conduit, the heating arrangement being arranged to vaporise cryogenic liquid fuel received at the input thereof utilising waste heat from the gas turbine engine and to output resulting supercritical fluid fuel to the third fuel conduit at the second pressure and thence to a combustor of the gas turbine engine. The primary pump may be a positive-displacement pump. The primary pump may be an electric positive-displacement pump comprising an electric motor having a rotor and a stator which are magnetically coupled and mutually physically unconnected and wherein one of the rotor and the stator is disposed inside the fuel store and either the stator or the rotor, as the case may be, is disposed external to the fuel store.

The engine system may further comprise a pressurisation heater arranged to vaporise cryogenic liquid fuel within the fuel store.

The fuel store may be arranged to store liquid hydrogen at a first temperature in the range 20K to 30K and at a first pressure between 1 and 10 bar, the secondary pumping arrangement being arranged to output liquid hydrogen at a second pressure between 50 bar and 100 bar and the heating arrangement being arranged to output supercritical fluid hydrogen to the third fuel conduit at the second pressure and at a temperature between 273K and 423K. Alternatively the fuel store may be arranged to store either cryogenic liquid ammonia or cryogenic liquid methane and to output either supercritical ammonia or supercritical methane, as the case may be, from the third fuel conduit to the combustor of the gas turbine engine.

The gas turbine engine may comprise a recuperator, the heating arrangement may comprise a first heat-exchanger and the engine system may further comprise apparatus arranged to circulate a buffer fluid in a circuit which includes the recuperator and the first heat-exchanger, the recuperator being arranged to transmit heat from exhaust gases of the gas turbine engine to the buffer fluid and the first heat-exchanger being arranged to transmit heat from the buffer fluid to cryogenic liquid fuel received from the second fuel conduit. Alternatively or additionally, the heating arrangement may comprise a second heat-exchanger, the engine system further comprising apparatus arranged to circulate a buffer fluid in a circuit which includes the second heat-exchanger and a third heat-exchanger, the third heat-exchanger being arranged to transmit heat from oil within an oil system of the gas turbine engine to the buffer fluid and the second heat-exchanger being arranged to transmit heat from the buffer fluid to cryogenic liquid fuel received from the second fuel conduit. In any case, the heating arrangement may further comprise an electrical heater arranged to heat and vaporise cryogenic liquid fuel provided to the input of the heating arrangement.

The secondary pumping arrangement may comprise a positive displacement pump or a plurality of positive-displacement pumps arranged in parallel.

Alternatively, the secondary pumping arrangement may comprise a centrifugal pump or a plurality of centrifugal pumps arranged in series. The heating arrangement and at least one centrifugal pump of the secondary pumping arrangement may be disposed within one or more nacelle cavities of the gas turbine engine.

According to a second aspect of the invention, an aircraft comprises an engine system according to the first aspect.

According to a third aspect of the invention, a method of providing fuel to a combustor of a gas turbine engine comprises the steps of
(i) storing cryogenic liquid fuel within a fuel store at a first pressure;
(ii) using a primary pump disposed within the fuel store to pump cryogenic liquid fuel out of the fuel store to a secondary pumping arrangement;
(iii) using the secondary pumping arrangement to increase the pressure of the cryogenic liquid fuel to a second pressure greater than the first pressure and providing the cryogenic liquid fuel at the second pressure to a heating arrangement;
(iv) heating the cryogenic liquid fuel to produce supercritical fluid fuel at the second pressure; and
(v) providing the supercritical fluid fuel at the second pressure to the combustor.

The cryogenic liquid fuel may be liquid hydrogen which is stored at a temperature in the range 20K to 30K, the first pressure being in the range 1 bar to 10 bar, the second pressure being in the range 50 bar to 100 bar, and liquid cryogenic hydrogen being heated to a temperature in the range 273K to 423K in step (iv).

### BRIEF DESCRIPTION OF THE SEVERAL VIEWS OF THE DRAWINGS

Embodiments of the invention are described below by way of example only and with reference to the accompanying drawings, in which:
- FIG. 1: shows a plan view an aircraft comprising two like engine systems, each comprising a respective fuel system and a respective hydrogen-burning turbofan engine; and
- FIG.2: shows an engine system of the Figure 1 aircraft in more detail.

### DETAILED DESCRIPTION

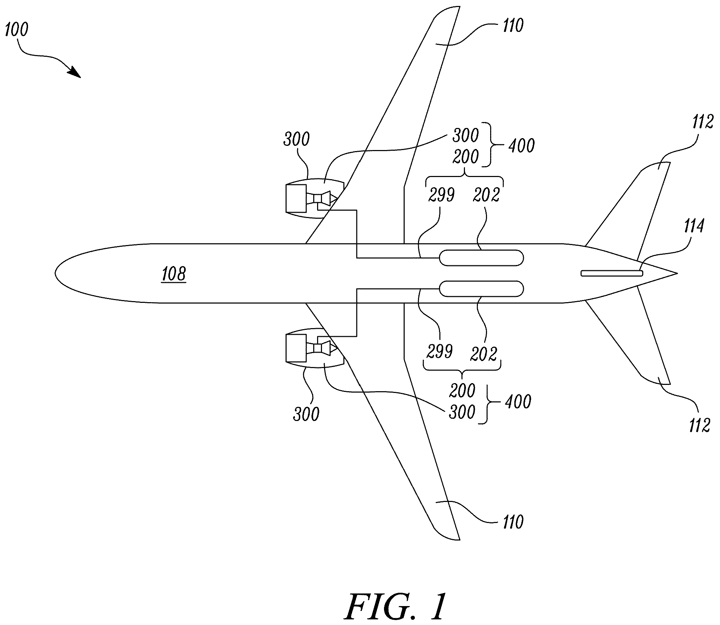

Referring to Figure 1, an aircraft 100 of the invention comprises a fuselage 108, wings 110, an empennage comprising horizontal and vertical stabilisers 112, 114, and two like engine systems 400, each comprising a respective fuel system 200 and a respective wing-mounted, hydrogen-fuelled turbofan engine 300 mounted under a respective wing 110. Each fuel system 200 comprises a respective cryogenic fuel store 202 housed within the fuselage 108 and a respective balance-of-plant 299 for pumping and conditioning hydrogen fuel and providing it to a respective turbofan engine 300 as a supercritical fluid.

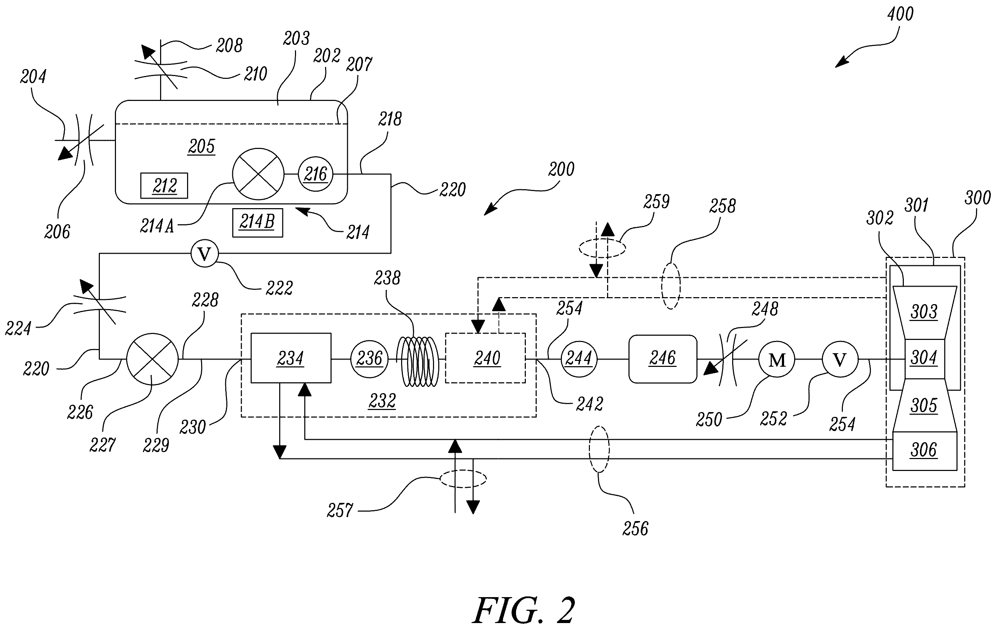

Figure 2 shows an engine system 400 of the Figure 1 aircraft 100 in greater detail, engine system 400 being an engine system of the invention. A balance-of-plant 299 in Figure 1 represents all elements of the fuel system 200 shown in Figure 2 other than the cryogenic fuel store 202. The fuel store 202 stores hydrogen at least in part as cryogenic liquid hydrogen 205. In general, in use of the engine system 400, the fuel store 202 is not completely full and an ullage 203 of hydrogen vapour is present within the fuel store 202, delineated from the liquid hydrogen 205 by a liquid/vapour boundary 207, the liquid hydrogen 205 settling at the bottom of the fuel store 202 with the ullage 203 on top. Depending on the temperature and pressure within the fuel store 202, the ullage 203 may comprise gaseous hydrogen, supercritical hydrogen or a mixture of these two phases. During operation of the aircraft 100, sloshing of the cryogenic liquid hydrogen 205 within the fuel store 102 and bubbles within it, can result in one of, or a mixture of gaseous and liquid/supercritical phases occurring in any region of the fuel store 202.

The turbofan engine 300 comprises a ducted fan (not shown) located in a nacelle 301 and an engine core 302 comprising, in axial flow series, compressor 303, combustor 304 and turbine 305 sections. A recuperator 306 is disposed at the exit of the turbine section 305.

In order to maintain the cryogenic liquid hydrogen 205 in a liquid state, it may be necessary to pressurise the fuel store 202 and insulate it to ensure sufficiently low temperature and high pressure are maintained to prevent vaporisation of its contents. For example, the fuel store 202 may be configured to store cryogenic liquid hydrogen fuel at a temperature in the range 20K to 30 K, such as 24K to 26K, or 25K. The fuel store 202 is pressurised to a first pressure in the range 1 bar to 10 bar, for example between 2 and 4 bar, or 3 bar. The principles of the present invention may extend to cryogenic liquid hydrogen fuel stored at higher pressures and/or temperatures.

The fuel store 202 houses a primary pump 214 arranged to pump the cryogenic liquid hydrogen 205 to a fuel outlet 218 of the fuel store 202 via a fuel filter 216. The primary pump 214 is an electric positive displacement pump comprising an electric motor having a rotor 214A within the fuel store 202 and a stator 214B external to the fuel store 202 which interact magnetically through the wall of the fuel store 202, but which are physically unconnected, thus avoiding the need for connections to pass through the wall of the fuel store 202, which may result one or more leakage paths through the wall of the fuel store 202. In the case of the primary pump 214, a positive displacement pump is preferred to a dynamic pump, due to better life expectancy, greater efficiency of pressurisation and better performance at low flow rates. The fuel store 202 may be filled with cryogenic liquid hydrogen via a fuel inlet 204 and a fuel inlet, variable-area valve 206. The pressure of the ullage 203 may be controlled by a pressure vent 208 and associated vent valve 210. In order to maintain pressure in the fuel store 202 as it is depleted of liquid hydrogen 205 during operation of the engine system 400, a small electric pressurisation heater 212 is provided within the fuel store 202 which may be operated to vaporise sufficient liquid hydrogen 205 to maintain the pressure of the ullage 203.

Liquid hydrogen pumped to the fuel outlet 218 is provided to the input 226 of a secondary pumping arrangement 227 via a first fuel conduit 220 which includes a fuel store shut-off valve 222 and a flow-control (variable-area) valve 224. The secondary pumping arrangement 227 is arranged to increase the pressure of the liquid hydrogen input to a second pressure in the range 50 bar to 100 bar, for example 69 bar to 71 bar, or 70 bar, in order to reduce boil-off prior to subsequent heating of the liquid hydrogen. The liquid hydrogen fuel is then transferred to the input 230 of a heating arrangement 232 via a second fuel conduit 229. The heating arrangement 232 operates to vaporise the liquid hydrogen provided at the input 230 thereof and to output supercritical hydrogen at an output 242 thereof at the second pressure and at a temperature between 273K and 423K, for example a temperature in the range 288K to 373K. A third fuel conduit 254 couples the output 242 of the heating arrangement 232 to the combustor 304 of the turbofan engine 300 where the supercritical hydrogen is combusted. The third fuel conduit 254 incorporates a fuel filter 244, a buffer tank 246, a fuel flow control (variable-area) valve 248, a fuel flow meter 250 and an engine shut-off valve 252.

Pumping cryogenic liquid hydrogen and then heating it is advantageous over the opposite method (i.e. heating followed by compression) since the large quality of heat required in the former method can be captured from the exhaust of the turbine section 305 of the turbofan engine 300 and/or other heat sources within the turbofan engine 300 (as explained below), this heat energy normally being lost to the environment. On the other hand, for heating followed by compression, using large amounts of electrical or mechanical power on board the aircraft 100 would significantly reduce the aircraft's efficiency, even assuming that sufficient power is available.

The heating arrangement 232 comprises a first heat-exchanger 234 which is arranged in a first buffer circuit 256 with the recuperator 306, the fuel system 200 further comprising means (not shown) arranged to drive a buffer fluid (for example gaseous nitrogen) around the first buffer circuit 256 During operation of the engine system 400, heat within exhaust gases exiting the turbine section 305 of the turbofan engine 300 is transferred to the buffer fluid by the recuperator 306 and then to liquid hydrogen which is input to the input 230 of the heating arrangement 232 at the first heat-exchanger 234. The heating arrangement 232 further includes a fuel filter 236 and an electrical heater 238 which vaporises liquid hydrogen within the heating arrangement 232 at start-up of the engine system 400 and may subsequently be switched off. The heating arrangement 232 may optionally further include a second heat-exchanger 240 arranged in a second buffer circuit 258 with a third heat-exchanger (not shown), with the engine system 400 then further comprising means (not shown) to drive a buffer fluid (for example gaseous nitrogen) around the second buffer circuit 258. The third heat-exchanger transfers heat from oil within an oil system (not shown) of the turbofan engine 300 to the buffer fluid. The heat-exchanger 240 then transfers heat within the buffer fluid to hydrogen within the heating arrangement 232. The buffer circuits 256, 258 may connect to cross-feed arrangements 257, 259 coupling each to the equivalent buffer circuit of the other engine system of the aircraft 100. Each heating arrangement 232 then receives heat from both gas turbofan engines 300. A malfunction in the heating arrangement 232 of one engine system 400 therefore does not prevent operation of the other engine system 400.

The fuel filters 216, 236, 244 operate to remove debris from flows of hydrogen within the fuel store 202, the heating arrangement 232 and the third fuel conduit 254 respectively.

The secondary pumping arrangement 227 may comprise a centrifugal pump, or two or more centrifugal pumps arranged in series in order to provide adequate output pressure (i.e. the second pressure of 50 bar to 100 bar). Centrifugal pumps have the advantages of low size and low mass. However they may be limited in terms of bearing lifetime, susceptibility to damage resulting from cavitation and rotor vibration and low efficiency at low flow rates. Alternatively, the secondary pumping arrangement 227 may be a positive displacement pump, or two or more positive displacement pumps arranged in parallel in order to provide a sufficient flow rate. The advantages of positive displacement pumps are their relatively high efficiency, reliability, lower cost, longer lifetime and high-pressure capability.

Variants of the engine system 400 may be arranged to store, pump, condition and combust methane or ammonia according to the principles outlined above.

After shutting down of the engine system 400, heat will be continuously exchanged into the engine's working fluid even after flame-out due to residual heat within the exhaust section 305 of the turbofan engine 300. Since a flow of liquid hydrogen within heat-exchanger 234 is then no longer available to provide cooling of the turbofan engine 300, the engine system 400 comprises means (not shown), such as an electric motor, arranged to crank the engine 300 for a period of time after shut-down in order to provide a flow of cool air to the recuperator 306 to prevent it over-heating. Cranking may be stopped when the temperature within the working fluid has reduced to an acceptable level.

Various examples have been described, each of which comprise one or more combinations of features. Except where clearly mutually exclusive, any of the features may be employed separately or in combination with any other features and the invention extends to and includes all combinations and sub-combinations of one or more features described herein.

## Claims

1. An engine system (400) comprising a gas turbine engine (300) and a fuel system (200), wherein the fuel system comprises
(i) a fuel store (202) for storing a fuel as a cryogenic liquid fuel (205) at a first pressure, the fuel store having a fuel outlet (218);
(ii) a primary pump (214) disposed within the fuel store and arranged to pump cryogenic liquid fuel stored within the fuel store to the fuel outlet;
(iii) a secondary pumping arrangement (227) having an input (226) coupled to the fuel outlet by a first fuel conduit (220) and an output (228) coupled to a second fuel conduit (229), the secondary pumping arrangement being arranged to output cryogenic liquid fuel at a second pressure greater than the first pressure; and
(iv) a heating arrangement (232) having an input (230) coupled to the output of the secondary pumping arrangement by the second fuel conduit and an output (242) coupled to a third fuel conduit (254), the heating arrangement being arranged to vaporise cryogenic liquid fuel received at the input thereof utilising waste heat from the gas turbine engine and to output resulting supercritical fluid fuel to the third fuel conduit at the second pressure and thence to a combustor (304) of the gas turbine engine.

2. An engine system according to claim 1 wherein the primary pump is a positive-displacement pump.

3. An engine system according to claim 2 wherein the primary pump is an electric positive-displacement pump comprising an electric motor having a rotor (214A) and a stator (214B) which are magnetically coupled and mutually physically unconnected and wherein one of the rotor and the stator is disposed inside the fuel store and either the stator or the rotor, as the case may be, is disposed external to the fuel store.

4. An engine system according to any preceding claim further comprising a pressurisation heater (212) arranged to vaporise cryogenic liquid fuel within the fuel store.

5. An engine system according to any preceding claim wherein the fuel store is arranged to store liquid hydrogen at a first temperature in the range 20K to 30K and at a first pressure between 1 and 10 bar, the secondary pumping arrangement is arranged to output liquid hydrogen at a second pressure between 50 bar and 100 bar and the heating arrangement is arranged to output supercritical fluid hydrogen to the third fuel conduit at the second pressure and at a temperature between 273K and 423K.

6. An engine system according to any of claims 1 to 4 wherein the engine system is arranged to store either cryogenic liquid ammonia or cryogenic liquid methane and to output supercritical ammonia or methane respectively from the third fuel conduit to the combustor of the gas turbine engine.

7. An engine system according to any preceding claim wherein
(i) the gas turbine engine comprises a recuperator;
(ii) the heating arrangement comprises a first heat-exchanger; and
(iii) the engine system further comprises apparatus (256) arranged to circulate a buffer fluid in a circuit which includes the recuperator and the first heat-exchanger,
wherein the recuperator is arranged to transmit heat from exhaust gases of the gas turbine engine to the buffer fluid and the heat-exchanger is arranged to transmit heat from the buffer fluid to cryogenic liquid fuel received from the second fuel conduit.

8. An engine system according to any preceding claim wherein the heating arrangement comprises a second heat-exchanger (240) and the engine system further comprises apparatus (258) arranged to circulate a buffer fluid in a circuit which includes the second heat-exchanger and a third heat-exchanger, and wherein the third heat-exchanger is arranged to transmit heat from oil within an oil system of the gas turbine engine to the buffer fluid and the second heat-exchanger is arranged to transmit heat from the buffer fluid to cryogenic liquid fuel received from the second conduit.

9. An engine system according to claim 7 or claim 8 wherein the heating arrangement further comprises an electrical heater (238) arranged to heat and vaporise cryogenic liquid fuel provided to the input of the heating arrangement.

10. An engine system according to any preceding claim wherein the secondary pumping arrangement comprises a positive displacement pump or a plurality of positive-displacement pumps arranged in parallel.

11. An engine system according to any of claims 1 to 9 wherein the secondary pumping arrangement comprises a centrifugal pump or a plurality of centrifugal pumps arranged in series.

12. An engine system according to claim 11 wherein the heating arrangement and at least one centrifugal pump of the secondary pumping arrangement are disposed within one or more nacelle cavities of the gas turbine engine.

13. An aircraft comprising an engine system according to any preceding claim.

14. A method of providing fuel to a combustor of a gas turbine engine, the method comprising the steps of
(i) storing cryogenic liquid fuel within a fuel store at a first pressure;
(ii) using a primary pump disposed within the fuel store to pump cryogenic liquid fuel out of the fuel store to a secondary pumping arrangement;
(iii) using the secondary pumping arrangement to increase the pressure of the cryogenic liquid fuel to a second pressure greater than the first pressure and providing the cryogenic liquid fuel at the second pressure to a heating arrangement;
(iv) heating the cryogenic liquid fuel to produce supercritical fluid fuel at the second pressure; and
(v) providing the supercritical fluid fuel at the second pressure to the combustor.

15. A method according to claim 14 wherein the cryogenic liquid fuel is liquid hydrogen which is stored at a temperature in the range 20K to 30K, the first pressure is in the range 1 bar to 10 bar, the second pressure is in the range 50 bar to 100 bar, and in step (iv) liquid cryogenic hydrogen is heated to a temperature in the range 273 K to 423 K.
